# EUROPÄISCHE PATENTSCHRIFT

(11) **EP 0 765 495 B1**
(45) Veröffentlichungstag und Bekanntmachung des Hinweises auf die Patenterteilung: **12.03.2003**
(21) Anmeldenummer: 95920776.2
(22) Anmeldetag: 10.06.1995
(51) Int. Cl.: G05B 19/042

(54) **VERFAHREN ZUR OPTIMIERUNG VON DATEN UND/ODER PROGRAMMTEILEN FÜR PROGRAMMIERTE STEUERGERÄTE UND STEUERGERÄT**
METHOD OF OPTIMISING DATA AND/OR PROGRAM PARTS FOR PROGRAMMED CONTROL UNITS, AND ASSOCIATED CONTROL UNIT
PROCEDE D'OPTIMISATION DE DONNEES ET/OU DE SEGMENTS DE PROGRAMMES POUR CONTROLEURS PROGRAMMES, ET CONTROLEUR CORRESPONDANT

(30) Priorität: 16.06.1994 DE 4420939; 10.01.1995 DE 19500453
(43) Veröffentlichungstag der Anmeldung: 02.04.1997
(73) Patentinhaber: ROBERT BOSCH GMBH, 70442 Stuttgart (DE)
(72) Erfinder: ZIMMERMANN, Jürgen, D-71665 Vaihingen (DE); KLEINSCHMIDT, Uwe, D-71732 Tamm (DE); WAGENER, Martin, D-71254 Ditzingen (DE); SCHULZ, Udo, D-71665 Vaihingen (DE); KRAMPE, Wolfgang, D-71272 Renningen (DE)
(86) Internationale Anmeldenummer: DE9500753
(87) Internationale Veröffentlichungsnummer: WO95034848

(56) Entgegenhaltungen:
- DE-A- 4 107 052
- DE-A- 4 122 371
- US-A- 4 019 175
- PATENT ABSTRACTS OF JAPAN vol. 8 no. 286 (P-324) [1723] ,27.Dezember 1984 & JP,A,59 149509 (TOSHIBA K.K.) 10.Februar 1983,

## Beschreibung

### Stand der Technik

Die Erfindung geht aus von einem Verfahren zur Optimierung von Daten und/oder Programmteilen für programmierte Steuergeräte nach der Gattung des Hauptanspruchs. Es ist schon ein Verfahren zur Optimierung von Daten und/oder Programmteilen für programmierte Steuergeräte aus der DE 30 18 275 A1 bekannt. Bei dem dortigen Verfahren wird das Steuerprogramm eines Steuergerätes zu Beginn in eine extern zum Steuergerät vorgesehene Daten/Programmspeichereinheit kopiert. Die Speichereinheit steht über eine serielle Datenübertragungsleitung mit einer Kontrolleinheit in Verbindung, die ebenfalls extern zum Steuergerät vorgesehen ist. In der Speichereinheit sind Schreibe/Lese-Speicher vorhanden, auf die sowohl die Kontrolleinheit als auch das Steuergerät zugreifen kann. Über die Kontrolleinheit werden vorprogrammierte Änderungen in die Speichereinheit eingetragen. Das Steuergerät arbeitet das Programm in der Speichereinheit ab. Die Programm/Daten-Änderungen in der Speichereinheit wirken sich direkt auf den Steuervorgang, den das Steuergerät bewirkt, aus. Die Auswirkungen können direkt beobachtet werden. Auf diese Art und Weise wird eine Optimierung der Daten/Programme des Steuergerätes erreicht.

Aus der JP-A-59 149509 ist eine Vorrichtung bekannt mit einem ROM und einem RAM bei dem durch Betätigung eines externen Schalters der Zugriff auf den ROM oder den RAM gesteuert werden kann. Ein geändertes Programm wird zunächst in den RAM und dann in den ROM geschrieben. Das Umschalten zwischen RAM und ROM erfolgt dabei ausschließlich aufgrund des externen Schalters.

Aus der DE-39 17 979 A1 ist ein weiteres Verfahren zur Optimierung von Daten und/oder Programmteilen für programmierte Steuergeräte bekannt. Dabei wird der programmierte Festwertspeicher des Steuergerätes aus dem Steuergerät entfernt und statt dessen eine Daten-Manipulationsvorrichtung in das Steuergerät eingesteckt. Der aus dem Steuergerät entfernte Festwertspeicher wird ebenfalls in die Daten-Manipulationsvorrichtung eingesteckt. In der Daten-Manipulationsvorrichtung ist zusätzlich noch ein Schreib/Lese-Speicher enthalten. Der Inhalt des Festwertspeichers wird zu Beginn einer Optimierung in den Schreib/Lese-Speicher übertragen. Das Steuergerät wird darüber hinaus mit einem externen Eingabegerät verbunden. Die Verbindung geschieht über eine serielle Schnittstelle. Über das Eingabegerät können Daten-/Programmänderungen in dem Schreib/Lese-Speicher der Daten-Manipulationsvorrichtung vorgenommen werden. Die Daten-Manipulationsvorrichtung enthält weiterhin eine Umschaltvorrichtung, mit deren Hilfe zwischen Schreib/Lese-Speicher und Festwertspeicher umgeschaltet werden kann. Der Mikrorechner des Steuergerätes arbeitet je nachdem entweder mit dem Schreib/Lese-Speicher oder mit dem Festwertspeicher zusammen.

### Vorteile der Erfindung

Das erfindungsgemäße Verfahren mit den kennzeichnenden Merkmalen des Hauptanspruchs hat demgegenüber den Vorteil, daß für die Optimierung von Daten und/oder Programmteilen des Steuergerätes das entwickelte Serien-Steuergerät verwendet werden kann. Schaltungsmäßige Änderungen an dem Serien-Steuergerät brauchen für die Optimierung der Daten und/oder Programmteile nicht vorgenommen werden. Es ist nicht einmal eine Öffnung des Steuergerätes erforderlich. Damit ist das vorgeschlagene Verfahren eine sehr kostengünstige Lösung, weil nicht nur schaltungsmäßige Änderungen im Serien-Steuergerät für die Optimierung der Daten und/oder Programmteile entfallen, sondern auch die Optimierung der Daten und/oder Programmteile schneller erfolgen kann, weil aufwendige Kontaktierungsarbeiten (Umstecken von Bauteilen, Isolations- und Abschirmungsarbeiten) entfallen. Darüber hinaus wird die Fehleranfälligkeit für das Verfahren verringert. Fehlkontaktierungen können nicht mehr so häufig auftreten; die Gefahr der Einstreuung von Störstrahlung aufgrund zusätzlicher Verbindungsleitungen ist ebenfalls verringert.

Weiterhin vorteilhaft ist, daß eine Optimierung von Daten und/oder Programmteilen auch für Steuergeräte mit Einchip-Mikrorechnern (bei denen der Programm/Datenspeicher im Mikrorechner integriert ist) leicht möglich ist. Für die Optimierung der Daten und/oder Programmteile ist es lediglich nötig, ein externes Applikationsgerät (z.B. ein entsprechend programmierter Personal Computer) über ein serielles Datenübertragungskabel mit der seriellen Schnittstelle des Steuergerätes zu verbinden.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, daß bestimmte Verzweigungen in dem Steuerprogramm vorgesehen werden, und diese als bedingte Verzweigungen ausgeführt werden und nur dann zu einer Verzweigung führen, wenn zuvor über das Applikationsgerät ein bestimmtes Codewort eingegeben wurde. Damit kann durch einfache programmtechnische Abfrage eines Codewortes eine Umschaltung zwischen den geänderten Daten im Daten/Programm-Schreib/Lese-Speicher und den ursprünglichen Daten im Daten/Programm-Festwertspeicher vorgenommen werden.

Für das Verfahren ist es sehr vorteilhaft, wenn als Programm/Daten-Festwertspeicher ein Flash-EPROM eingesetzt wird. Damit kann das Programm im Flash-EPROM nämlich innerhalb sehr kurzer Zeit applikationsspezifisch geändert werden, z.B. um die Verzweigungen im Programm vorzusehen oder aber indem einfach nur bestimmte Adreßänderungen vorgenommen werden.

In diesem Fall ist es dann auch weiterhin vorteilhaft, wenn die Verzweigungen als unbedingte Verzweigungen ausgeführt werden. Dadurch kann die Rechenbelastung des Mikrorechners resultierend aus den zusätzlichen Bedingungsabfragen vermieden werden.

Weitere vorteilhafte Maßnahmen sind aus den Ansprüchen 5 bis 12 entnehmbar.

Das Verfahren kann sehr vorteilhaft auch bei einem Steuergerät gemäß Anspruch 13 angewendet werden. Dieses Steuergerät zeichnet sich dadurch aus, daß es eine Decodierschaltung enthält, die so ausgelegt ist, daß sie bei einem Zugriff des Mikrorechners auf eine bestimmte Adresse oder einen bestimmten Adreßbereich eine Umschaltung vornimmt, und zwar so, daß der Mikrorechner statt auf die Daten und/oder Programmteile in dem Daten/Programm-Festwertspeicher auf die entsprechenden Daten und/oder Programmteile in dem Daten/Programm-Schreib/Lese-Speicher zugreift. Bei einem derartigen Steuergerät brauchen keine speziellen Änderungen, wie Verzweigungen oder modifizierte Vektortabellen, am Programm-Code des Steuerprogramms vorgenommen werden.

Die weitere Ausgestaltung des Steuergerätes gemäß Anspruch 14 hat den Vorteil, daß durch einen einfachen Schreibvorgang in das spezielle Register die Umschaltung bewirkt werden kann. Dabei kann der Schreibbefehl über einen seriellen Bus von einem externen Applikationsgerät übertragen werden.

Weiterhin vorteilhaft ist auch, wenn die Decodierschaltung des Steuergerätes zusammen mit einer Speicherbank-Umschalteinrichtung auf einem Chip integriert ist. Die vorgeschlagene Lösung ist nämlich dann nur mit wenig Mehrkosten verbunden, da die zusätzliche Speicherbank-Umschaltungseinrichtung sowieso bei vielen Steuergeräten vorgesehen ist und als separater Baustein ausgeführt wird.

### Zeichnung

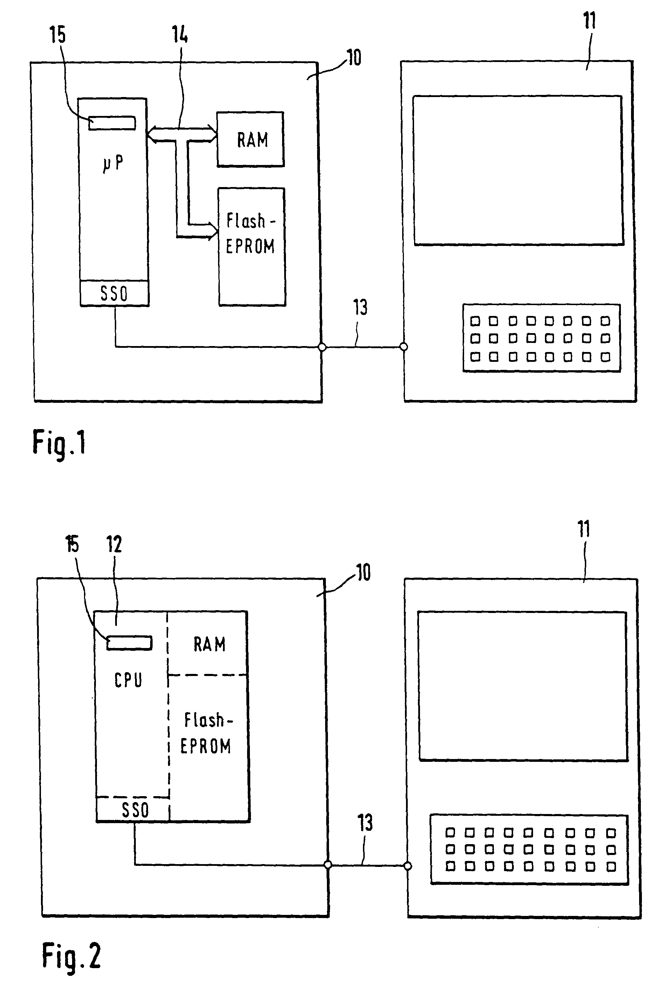

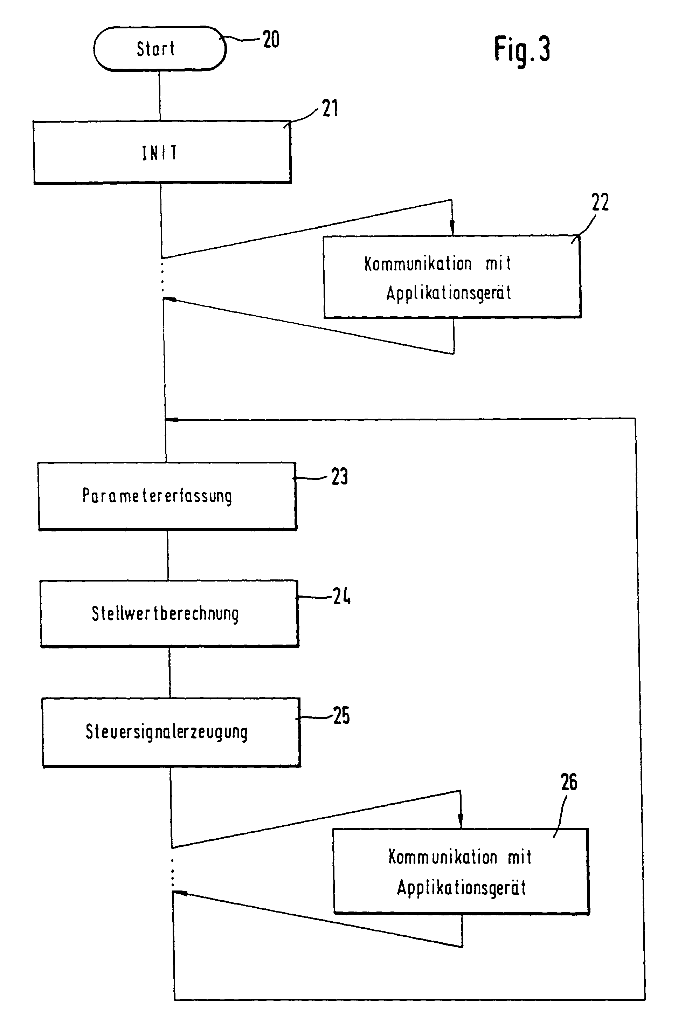

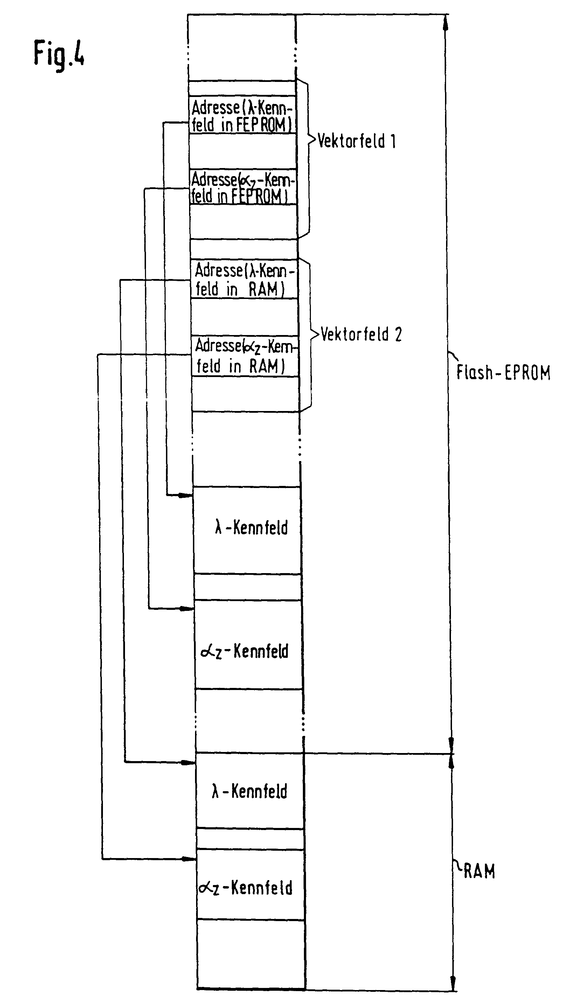

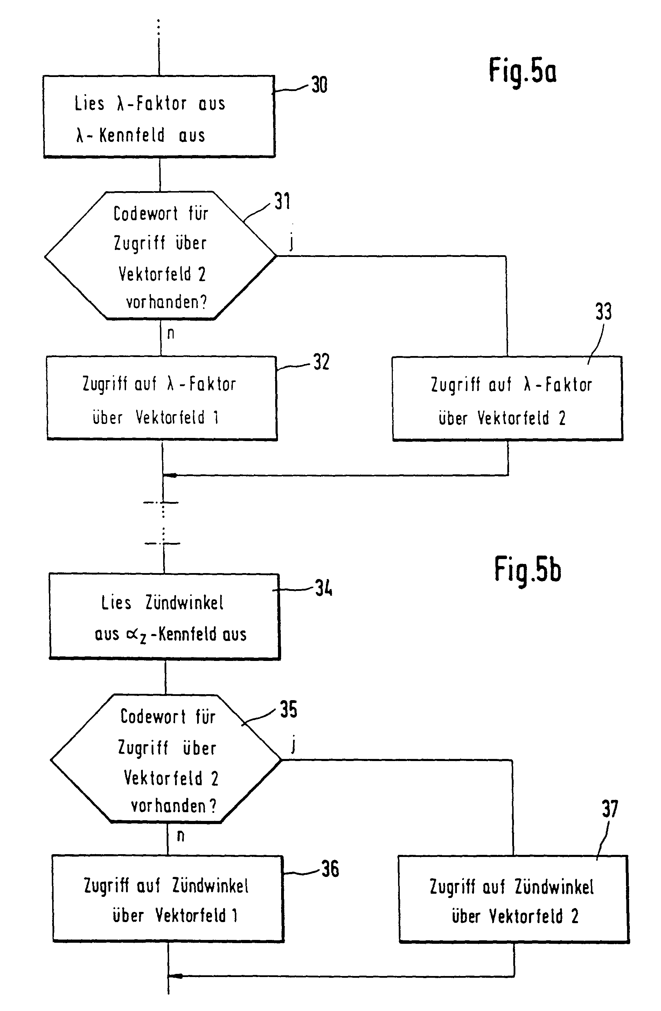

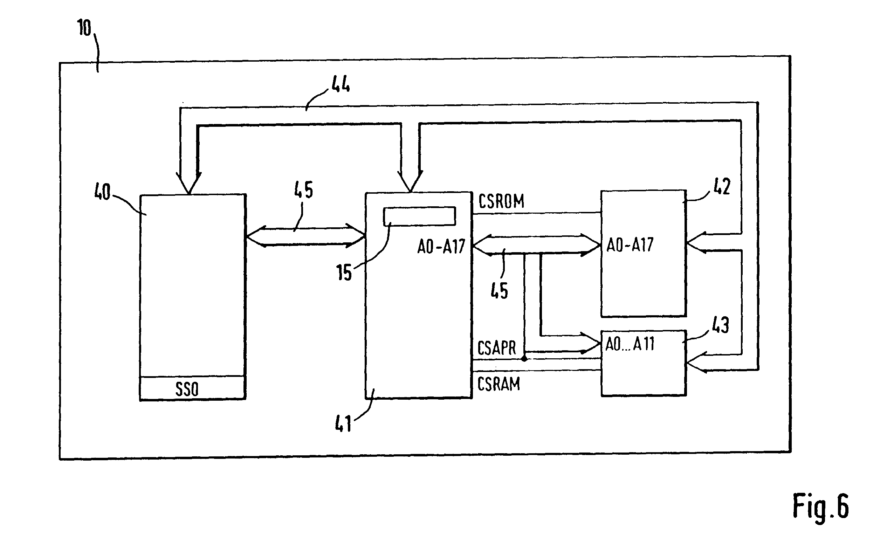

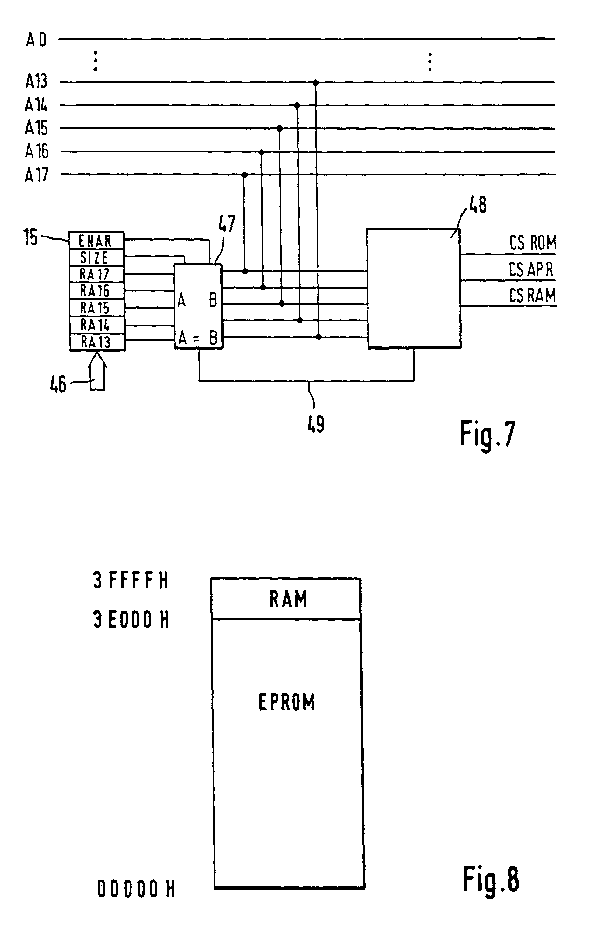

Ein Ausführungsbeispiel der Erfindung ist in der Zeichnung dargestellt und in der nachfolgenden Beschreibung näher erläutert. Es zeigen Figur 1 den Anschluß eines externen Applikationsgerätes an ein Steuergerät, wobei der Aufbau des Steuergerätes durch ein Blockschaltbild dargestellt ist; Figur 2 den gleichen Aufbau wie in Figur 1, wobei jedoch in dem Steuergerät ein Einchip-Mikrorechner eingesetzt ist; Figur 3 ein grobes Ablaufdiagramm für das erfindungsgemäße Verfahren; Figur 4 eine Darstellung der Speicheraufteilung des Steuergerätes; Figur 5a ein Struktogramm für den Kennfeldzugriff auf ein Lambda-Kennfeld einer Motorsteuerung und Figur 5b ein Struktogramm für den Kennfeldzugriff auf ein Zündwinkel-Kennfeld für eine Motorsteuerung; Figur 6 ein grobes Blockschaltbild für ein drittes Ausführungsbeispiel für ein Steuergerät zur Verwendung bei dem Verfahren; Figur 7 ein grobes Blockschaltbild der Umschalteinrichtung des Steuergerätes gemäß Figur 6 und Figur 8 eine grobe Speichereinteilung für das Steuergerät gemäß Figur 6.

### Beschreibung des Ausführungsbeispiels

In Figur 1 bezeichnet die Bezugszahl 10 ein Motorsteuergerät für die Steuerung von Zündung und Einspritzung einer Brennkraftmaschine in einem Kraftfahrzeug. Der Aufbau eines solchen Motorsteuergerätes ist aus dem Stand der Technik hinlänglich bekannt, weshalb hierauf im folgenden nur insoweit eingegangen wird, als es für das Verständnis des hier beschriebenen Verfahrens zur Optimierung von Daten und/oder Programmteilen erforderlich ist. Das Steuergerät 10 enthält einen Mikroprozessor µP. Der Mikroprozessor µP ist über eine entsprechende Busverbindung 14 mit einem Daten/Programm-Schreib/Lese-Speicher RAM und einem Daten/Programm-Festwertspeicher Flash-EPROM verbunden. In dem Mikroprozessor µP ist noch ein Adressregister 15 dargestellt, dessen Funktion erst später erläutert wird. In dem Daten/Programm-Festwertspeicher ist das eigentliche Steuerprogramm des Steuergerätes 10 abgespeichert. Der Daten/Programm-Schreib/Lese-Speicher dient in dem Steuergerät hauptsächlich zur Speicherung variabler Größen, die während des Ablaufs des Steuerprogramms errechnet werden. Mit dem Steuergerät 10 ist ein externes Applikationsgerät 11 verbunden. Die Verbindung ist dabei über ein serielles Datenübertragungskabel 13 hergestellt. Das serielle Datenübertragungskabel 13 ist intern im Steuergerät 10 an die serielle Schnittstelle SS0 des Mikroprozessors µP herangeführt. Als externes Applikationsgerät 11 kommt jeder beliebige entsprechend programmierte Personal Computer mit Tastatur und Bildschirm in Frage. Bei der Applikation von Motorsteuergeräten ist es sinnvoll, wenn das externe Applikationsgerät 11 als tragbares Gerät ausgeführt ist, weil es dann nämlich leicht während des Betriebs des Fahrzeuges im Fahrzeug untergebracht werden kann. Es kommt also hierfür insbesondere der Einsatz eines Laptop-Personal Computers in Frage.

Außer dem Steuergerät 10 sind für die Motorsteuerung noch die Sensoren zur Erfassung der Motorzustandsgrößen, wie Drehzahl, Luftdurchlaß, Temperatur usw., die Stellglieder zur Erzeugung der Zünd- und Einspritzimpulse,
und die Mittel zur Hochspannungsverteilung und ein Kraftstoffkreislauf erforderlich. Im Steuergerät werden aus den aufbereiteten Sensorsignalen mit Hilfe des Mikroprozessors die Ausgangssignale zur Ansteuerung der Zündungs- und Einspritzendstufen berechnet. Die Berechnung erfolgt nach einer durch das Steuerprogramm gegebenen Vorschrift unter Berücksichtigung der motorspezifischen Daten, wie beispielsweise Kennfelder für Einspritzmenge und Zündwinkel. Ein derartiges Motorsteuergerät bietet den Vorteil, daß mit ihm eine motorspezifische Anpassung ohne Änderung der Schaltung des Steuergerätes durchführbar ist. Zur Anpassung an den jeweiligen Motor ist lediglich die in dem Programm/Daten-Festwertspeicher Flash-EPROM untergebrachte Software zu modifizieren. Dabei kann es sehr häufig schon ausreichend sein, bei gleichem Programm, d.h. bei unveränderter Berechnungsvorschrift, die Daten entsprechend den neuen Anforderungen zu ändern. Anforderungen sind dabei z.B. die Optimierung der Abgaswerte, die Minimierung des Kraftstoffverbrauchs, die Berücksichtigung von Komforteigenschaften (Laufruhe) usw.

In einem Zündkennfeld sind für alle möglichen Betriebszustände der Brennkraftmaschine Zündwinkel α_{Z} für die Zylinder der Brennkraftmaschine eingetragen. Die Betriebszustände der Brennkraftmaschine sind dabei durch die erfaßten Parameter Motordrehzahl und Motorlast gekennzeichnet. In einem Lambda-Kennfeld ist das Luft-Kraftstoff-Verhältnis Lambda für alle möglichen Betriebszustände der Brennkraftmaschine eingetragen. Auch für das Lambda-Kennfeld sind die Betriebszustände der Brennkraftmaschine durch die Motorparameter Motordrehzahl und Motorlast gekennzeichnet.

In Figur 2 ist der gleiche Aufbau dargestellt wie in Figur 1. Gleiche Bezugszahlen bezeichnen hier das gleiche wie in Figur 1. Der Unterschied gegenüber Figur 1 besteht darin, daß in diesem Fall im Steuergerät 10 ein Einchip-Mikrorechner 12 eingesetzt ist. Es sind sowohl CPU, Daten/Programm-Schreib/Lese-Speicher RAM und Daten/Programm-Festwertspeicher Flash-EPROM als auch die serielle Schnittstelle SS0 auf einem Chip integriert.

Der Einsatz eines Flash-EPROMs in dem Steuergerät 10 bietet den Vorteil, daß dieses in der Schaltung gelöscht und programmiert werden kann. Es ist hierzu kein gesondertes Programmiergerät erforderlich, wie es bei den EPROMs meistens der Fall ist.

Anhand der Figur 3 soll nachfolgend der Ablauf des erfindungsgemäßen Verfahrens zur Optimierung der Kennfelddaten näher erläutert werden. Nach dem Einschalten der Versorgungsspannung im Programmschritt 20 findet eine Initialisierung des Steuergerätes 10 statt. Die Initialisierung betrifft die Voreinstellung bestimmter Register des Mikroprozessors µP sowie den Test verschiedener Komponenten des Steuergerätes, u.a. auch des Speicherinhaltes des Daten/Programm-Festwertspeichers. Nach der Initialisierung im Programmschritt 21 findet dann eine Kommunikation mit dem Applikationsgerät 11 statt. Hierzu ist jedoch zu sagen, daß dieser Programmteil nicht zyklisch unter harten Echtzeitbedingungen durchlaufen wird. Vielmehr ist dieser Programmteil als Interrupt-Programmteil anzusehen. Er wird also nur abgearbeitet, wenn eine entsprechende Anforderung von dem Applikationsgerät 11 an das Steuergerät 10 ausgesendet wurde. Dabei wird als erstes von dem Applikateur über die Tastatur ein Befehl in das Steuergerät 10 eingegeben, durch den die Kennfelddaten für das Zündwinkel-Kennfeld und das Lambda-Kennfeld aus dem Daten/Programm-Festwertspeicher in den Daten/Programm-Schreib/Lese-Speicher des Steuergerätes kopiert werden. Dies geschieht im Programmschritt 22. Anschließend wird das eigentliche Steuerprogramm des Steuergerätes 10 weiter abgearbeitet. Das Steuerprogramm ist in dem Daten/Programm-Festwertspeicher abgespeichert. Das Steuerprogramm kann grob in die folgenden Programmteile eingeteilt werden. Zuerst findet die Parametererfassung im Programmschritt 23 statt. Darin werden die Motorparameter wie Drehzahl, Motorlast, Temperatur, usw. durch Auswertung der Sensorsignale ermittelt. Im Programmschritt 24 folgt dann die Berechnung der Stellgrößen und Stellwerte. Bei der Berechnung der Stellwerte wird auch auf die Kennfelddaten des Zündwinkel-Kennfelds und des Lambda-Kennfelds zugegriffen. Hierauf wird nachfolgend noch genauer eingegangen. Im Programmschritt 25 erfolgt dann die Steuersignal-Erzeugung für die angeschlossenen Aktuatoren des Steuergerätes.

Als letzter Programmteil ist wiederum eine Kommunikation mit dem Applikationsgerät 11 im Programmschritt 26 vorgesehen. Innerhalb dieses Programmteils werden Änderungen der Kennfelder vorgenommen, um den Steuervorgang zu optimieren. Diese Änderungen werden von dem Mikrorechner in den Daten/Programm-Schreib/Lese-Speicher eingetragen.

Nach der optionalen Abarbeitung dieses Programmteils 26 verzweigt das Programm wieder zum Programmschritt 23, mit dem ein neuer Steuerzyklus beginnt. Die eingetragenen Änderungen in den Daten/Programm-Schreib/Lese-Speicher können in den nachfolgenden Zyklen beibehalten werden oder aber dort geändert werden, je nachdem, ob die Änderung als sinnvoll angesehen wird oder nicht. Nach der Optimierung der Kennfelddaten wird das Steuerprogramm beendet. Die in den Daten/Programm-Schreib/Lese-Speicher eingetragenen Änderungen können in das Applikationsgerät 11 ausgelesen werden. Wenn die Daten für optimal befunden wurden, kann dann nachfolgend der Daten/Programm-Festwertspeicher Flash-EPROM mit den optimierten Daten neu programmiert werden. Somit sind dann die Änderungen fest in dem Steuergerät 10 eingespeichert.

Nachfolgend wird noch genauer auf den Kennfeldzugriff bei der Stellwertberechnung im Programmteil 24 eingegangen. Dazu ist in Figur 4 die Speichereinteilung während der Applikation der Steuergeräte näher dargestellt. Der untere Teil des dargestellten Adreßraums ist für den Zugriff auf den Daten/Programm-Schreib/Lese-Speicher reserviert. Der obere Teil des Adreßraums ist für den Zugriff auf den Daten/Programm-Festwertspeicher Flash-EPROM reserviert. Üblicherweise findet der Zugriff auf die Daten eines Kennfeldes über einen Adreßzeiger statt. Die Adreßzeiger sind dabei in einem Vektorfeld 1 zusammengefaßt. Der Adreßzeiger für das Lambda-Kennfeld weist dabei auf den Beginn des Lambda-Kennfeldes innerhalb des Daten/Programm-Festwertspeichers. Der Adreßzeiger für das Zündwinkel-Kennfeld weist dabei auf den Beginn des Zündwinkel-Kennfeldes innerhalb des Daten/Programm-Festwertspeichers. Bei einem Zugriff auf die entsprechenden Kennfelddaten liest der Mikrorechner zuerst den Inhalt des Adreßzeigers des entsprechenden Kennfeldes aus und greift dann darüber auf die entsprechenden Kennfelddaten zu. Für die Applikation von diesen Kennfeldern ist jetzt zusätzlich ein zweites Vektorfeld in dem Daten/Programm-Festwertspeicher vorgesehen. Darin sind ebenfalls Adreßzeiger für ein Lambda-Kennfeld und ein Zündwinkel-Kennfeld vorgesehen. Diese Adreßzeiger zeigen jedoch auf ein Lambda-Kennfeld bzw. Zündwinkel-Kennfeld, die in dem Daten/Programm-Schreib/Lese-Speicher RAM eingetragen sind. Das zweite Vektorfeld ist speziell für die Applikation der Kennfelder in den Daten/Programm-Festwertspeicher einprogrammiert worden. Dies ist insbesondere dann leicht möglich, wenn der Daten/Programm-Festwertspeicher als Flash-EPROM ausgelegt ist.

In Figur 5a ist jetzt der Zugriff auf die Daten des Lambda-Kennfeldes für die Motorsteuerung näher dargestellt. Im Programmschritt 30 wird der Mikroprozessor des Steuergerätes 10 dazu aufgefordert, den zugehörigen Lambda-Faktor zu den ermittelten Daten für Motordrehzahl und Motorlast aus dem Lambda-Kennfeld auszulesen. In Programmschritt 31 ergeht jetzt die Abfrage, ob ein spezielles Codewort für den Zugriff auf das Lambda-Kennfeld über Vektorfeld 2 vorliegt oder nicht. Wenn dies der Fall ist, dann findet der Zugriff auf das Lambda-Kennfeld über den Adreßzeiger des Lambda-Kennfeldes innerhalb des Vektorfeldes 2 statt. Dies ist im Programmschritt 33 dargestellt. Lag das Codewort für den Zugriff über das Vektorfeld 2 nicht vor, dann wird davon ausgegangen, daß ein Zugriff über das Vektorfeld 1 stattfinden soll und es wird über den entsprechenden Adreßzeiger auf das Lambda-Kennfeld im Daten/Programm-Schreib/Lese-Speicher zugegriffen. Dies ist im Programmschritt 32 dargestellt. Anschließend wird die Stellwertberechnung fortgeführt.

In Figur 5b ist der entsprechende Zugriff auf das Zündwinkel-Kennfeld dargestellt. Im Programmschritt 34 erhält der Mikrorechner den Befehl, einen Zündwinkel aus dem Zündwinkel-Kennfeld auszulesen. In Abfrage 35 wird überprüft, ob das Codewort für den Zugriff über das Vektorfeld 2 vorliegt. Wenn dies der Fall ist, findet der Zugriff über den entsprechenden Adreßzeiger im Vektorfeld 2 statt (siehe Programmschritt 37). Im anderen Fall findet der Zugriff über den Adreßzeiger im Vektorfeld 1 statt (siehe Programmschritt 36).

Tritt bei der Durchführung von Datenänderungen innerhalb des Kennfeldes eine Störung auf oder wurde eine für den Betrieb unzulässige Datenänderung vorgenommen, so kann durch entsprechende Übertragung des richtigen Codewortes zu dem Steuergerät 10 sofort wieder auf die ursprünglichen Kennfelddaten zurückgegriffen werden.

Die Durchführung der Datenänderungen in dem Daten/Programm-Schreib/Lese-Speicher wird von dem Mikroprozessor im Hintergrund seines eigentlichen Steuerprogramms ausgeführt. Datenänderungen auch bei laufendem Betrieb der Brennkraftmaschine sind damit möglich.

Das Applikationsgerät 11 kann so komfortabel programmiert sein, daß die eingegebenen Werte direkt im physikalischen Wertebereich angezeigt werden, daß eine Fehleranzeige bei Fehlbedienung oder Bereichsüberschreitung eines eingegebenen Wertes erfolgt, daß eine Fehlermeldung abgegeben wird, wenn ein bestimmter Speicherbereich, der von der Überschreibung ausgenommen ist, überschrieben werden soll, daß ein Echtzeitvergleich verschiedener Datenänderungen zur sofortigen Beurteilung der durchgeführten Änderungen möglich ist.

Das vorgestellte Verfahren ist nicht auf das hier beschriebene Ausführungsbeispiel beschränkt. Es sind vielfältige Abwandlungsmöglichkeiten denkbar. Wenn z.B. der Speicherplatz in dem Daten/Programm-Schreib/Lese-Speicher nicht ausreicht, ist es möglich, daß jeweils nur ein einzelnes Kennfeld in diesem Speicher optimiert wird und nach dessen Optimierung dann in einem nächsten Schritt ein weiteres Kennfeld optimiert wird. Es muß auch nicht unbedingt eine Änderung von Kennfelddaten erfolgen. Vielmehr ist es auch möglich, bloß einzelne Kennwerte für das Steuerprogramm zu optimieren. Als Beispiel werden die Reglerparameter für eine PID-Regelung (z.B. bei einer Leerlaufregelung) genannt. Auch können Filterkonstanten oder bestimmte Schwellwerte entsprechend appliziert werden.

Es ist ebenfalls denkbar, daß die Abfrage der Codewörter für den Zugriff auf ein Kennfeld entfällt und statt dessen ein unbedingter Verzweigungsschritt in das Steuerprogramm eingefügt wird. Damit kann die Rechenzeitbelastung verringert werden. Sollen nur einzelne Parameter bzw. Konstanten appliziert werden, ist es möglich, daß in das Steuerprogramm an den Stellen, an denen auf die Parameter bzw. Konstanten zugegriffen wird, einfach nur andere Adressen eingetragen werden, so daß der Mikrorechner statt auf den Daten/Programm-Festwertspeicher auf den Daten/Programm-Schreib/Lese-Speicher zugreift.

Da in modernen Steuergeräten häufig über Adresszeiger auf Daten (z.B. Kennlinien/-felder) zugegriffen wird, kann durch Änderung der Adresszeigereinträge sehr einfach auf die zu applizierenden Daten umgeschaltet werden. Die Änderung von Adressen kann also auch die Änderung der Einträge von Adresszeigern betreffen.

Ebenfalls denkbar ist, daß die Fähigkeit mancher Mikrorechner, durch Setzen bestimmter Registerwerte eine Umschaltung auf verschiedene Speicherbereiche, in diesem Fall von dem Daten/Programm-Festwertspeicher auf den Daten/Programm-Schreib/Lese-Speicher vorzunehmen, für die Applikation ausgenutzt wird. Eine solche Fähigkeit besitzt z.B. der Mikrorechner K30 der Firma Intel. Das Prinzip dieser Umschaltung ist: In das spezielle Adressregister 15 wird zu Beginn der Applikation eine Basisädresse eingeschrieben. Bei jedem Datenzugriff wird die Basisadresse zu der aus dem Steuerprogramm ausgelesenen Adresse hinzuaddiert. Dadurch greift der Mikrorechner (µP, 12) automatisch auf die Daten im Daten- und/oder Schreib/Lese-Speicher (RAM) zu. Hierdurch erübrigt sich eine applikationsspezifische Änderung des Steuerprogramms.

Sollte der Mikrorechner unterschiedliche Befehlscodes für den Lesevorgang auf Daten innerhalb des Daten/Programm-Festwertspeichers im Vergleich zu den Lese-Zugriffen auf den Daten/Programm-Schreib/Lese-Speicher aufweisen, so kann es nötig werden, daß für die Applikation diese Programmbefehle verändert werden müssen.

Auch eine Optimierung von bestimmten Programmteilen des Steuerprogramms ist auf die gleiche Art und Weise möglich. Der Applikateur muß hierbei dafür Sorge tragen, daß der zu ändernde Programmteil in den Daten/Programm-Schreib/Lese-Speicher eingetragen wird und dort zum richtigen Zeitpunkt abgearbeitet wird.

In Figur 6 ist ein drittes Ausführungsbeispiel eines Steuergerätes zur Verwendung bei dem beschriebenen Verfahren dargestellt. Mit der Bezugszahl 10 ist das Steuergerät bezeichnet. Es kommt hier ein beliebiges Steuergerät in Betracht, wie schon zuvor erläutert. Das Steuergerät 10 enthält einen Mikrorechner 40, einen Daten/Programm-Festwertspeicher 42 (z.B. EPROM), einen Daten/Programm-Schreib/Lese-Speicher 43 (z.B. RAM) und eine Decodierschaltung 41. Mit der Bezugszahl 44 ist der Datenbus und Steuerbus des Steuergerätes 10 bezeichnet. Die Bezugszahl 45 bezeichnet den Adreßbus, der vom Mikrorechner 40 zu der Decodierschaltung 41 führt. Von der Decodierschaltung 41 führt der Adreßbus 45 zu dem Daten/Programm-Festwertspeicher 42 und dem Daten/Programm-Schreib/Lese-Speicher 43. Die Ausführung ist jedoch so gewählt, daß nur die Adreßleitung A0 bis A11 an den Daten/Programm-Schreib/Lese-Speicher geführt sind. Demgegenüber sind die Adreßleitungen A0 bis A17 alle bis zu dem Daten/Programm-Festwertspeicher 42 geführt. Eine Besonderheit besteht noch darin, daß die Adreßleitung A12 separat an den Daten/Programm-Schreib/Lese-Speicher 43 herangeführt ist. Von der Decodierschaltung 41 geht eine Chip-Auswahlleitung CSAPR aus, die zu dem Daten/Programm-Schreib/Lese-Speicher 43 geführt ist. Diese Leitung ist mit der Adreßleitung A12 des Adreßbusses 45 verknüpft. Weiterhin gehen von der Decodierschaltung 41 die Chip-Auswahlleitungen CSROM und CSRAM aus. Die Chip-Auswahlleitung CSROM ist zu dem Daten/Programm-Festwertspeicher 42 geführt. Die Chip-Auswahlleitung CSRAM ist zu dem Daten/Programm-Schreib/Lese-Speicher 43 geführt.

In dem Mikrorechner 40 ist noch eine serielle Schnittstelle SS0 gesondert dargestellt, die zur seriellen Datenübertragung mit extern anschließbaren Geräten dient. In der Decodierschaltung 41 ist noch das Adreßregister 15 dargestellt, das zuvor schon bei den anderen Ausführungsbeispielen erwähnt wurde.

Auf die Funktionsweise der beschriebenen Anordnung wird nachfolgend noch in Verbindung mit Figur 7 näher eingegangen. In Figur 7 ist die Decodierschaltung 41 näher dargestellt. In der Decodierschaltung 41 ist das Adressenregister 15 enthalten. Das Adressenregister 15 ist so ausgelegt, daß es von dem Mikrorechner 40 beschrieben und gelesen werden kann. Hierzu ist schematisch der Busanschluß 46 dargestellt. Natürlich kann der Bus 46 aus dem Adreßbus 45 und dem Daten- und Steuerbus 44 bestehen. Das Adreßregister 15 enthält dann eine dementsprechende Decodierschaltung, so daß es nur auf eine bestimmte Adresse reagiert. Die Registerzellen RA13 bis RA17 enthalten eine Adreßinformation. Sie sind an die entsprechenden Eingänge A einer Vergleicherschaltung 47 herangeführt. An die Eingänge B der Vergleicherschaltung 47 sind die entsprechenden Adreßleitungen A17 bis A13 des Adreßbusses 45 herangeführt. Die Registerplätze ENAR und SIZE sind über entsprechende Verbindungsleitungen an Steuereingänge der Vergleicherschaltung 47 herangeführt. Der Ausgang der Vergleicherschaltung 47 ist mit einem Eingang einer Adressendecoderschaltung 48 verbunden. Die Adressendecoderschaltung 48 erzeugt die Chip-Auswahlsignale für den Daten/Programm-Festwertspeicher und den Daten/Programm-Schreib/Lese-Speicher 43. Zu diesem Zweck sind die Adreßleitungen A13 bis A17 mit der Adressendecoderschaltung 48 verbunden. Für Applikationszwecke ist noch eine weitere Chip-Auswahlleitung CSAPR an der Adressendecoderschaltung 48 vorgesehen. Wie in Figur 6 dargestellt, führt die Chip-Auswahlleitung CSAPR zu dem Daten/Programm-Schreib/Lese-Speicher 43.

Nachfolgend wird davon ausgegangen, daß die Speicherbausteine 42 und 43 in Worten von 8 Bit organisiert sind und daß der Datenbus eine Breite von 8 Bit aufweist. Der Mikrorechner 40 kann mit seinen 18 Adreßleitungen A0 bis A17 einen Adreßraum vom 256 KByte ansprechen. Die Größe des Daten/Programm-Festwertspeichers 42 beträgt ebenfalls 256 KByte. Die Größe des Daten/Programm-Schreib/Lese-Speichers beträgt 8 KByte. Es sind nämlich nur die Adreßleitungen A0 bis A12 an den Daten/Programm-Schreib/Lese-Speicher angeschlossen. Es werden also nicht sämtliche Speicherplätze des Daten/Programm-Festwertspeichers 42 in dem beschriebenen Steuergerät benutzt. Die Adressendecoderschaltung 48 ist so ausgelegt, daß sie bei einem Zugriff des Mikrorechners 40 auf die Adressen im Bereich von 00000H bis 3DFFFH automatisch die Chip-Auswahlleitung CSROM auf High setzt und die anderen Chip-Auswahlleitungen CSAPR und CSRAM sperrt (d.h. auf Low setzt). Nur wenn der Mikrorechner 40 auf die Adressen im Bereich von 3E000H bis 3FFFFH zugreift, setzt die Adressendecoderschaltung 48 die Chip-Auswahlleitung CSRAM auf High und sperrt die anderen Chip-Auswahlleitungen CSROM und CSAPR. Dies ist die normale Funktionsweise der Adressendecoderschaltung 48. Die Adressendecoderschaltung 48 ist jetzt aber auch für Applikationszwecke ausgelegt. Für die Applikation wird von einem externen Kommunikationsgerät über die serielle Schnittstelle SS0 ein Befehl zum Mikrorechner 40 gegeben. Dieser Befehl beinhaltet ein Datenwort, das in das Adressenregister 15 eingetragen werden soll. Durch das Datenwort werden die Registerplätze RA13 bis RA17 des Adressenregisters 15 belegt. Der Eintrag in das Adressenregister 15 ist beliebig. Als Beispiel sei angenommen, daß auf die Registerplätze RA13 bis RA17 der binäre Wert %11000 eingetragen wird. Wenn jetzt über den Adressenbus 45 der Mikrorechner 40 eine Adresse im Bereich von 30000H bis 31FFFH anwählt, wird die Vergleicherschaltung 47 Gleichheit an den Eingängen A und B feststellen. Sie wird dann den Ausgang A = B auf High-Potential legen. Das High-Signal steht über die Leitung 49 aber auch an der Adressendecoderschalturig 48 an. Dieses führt dazu, daß nicht wie eigentlich im Normalbetrieb vorgesehen, die Chip-Auswahlleitung CSROM aktiviert wird, sondern statt dessen die Chip-Auswahlleitungen CSAPR und CSRAM auf High gesetzt und die Chip-Auswahlleitung CSROM gesperrt wird. Im Ergebnis greift also der Mikrorechner 40 nicht auf den Daten/Programm-Festwertspeicher 42 zu, sondern statt dessen auf den Daten/Programm-Schreib/Lese-Speicher 43.

Dadurch, daß die Chip-Auswahlleitung CSAPR auf den A12-Eingang des Daten/Programm-Schreib/Lese-Speichers 43 geschaltet ist, kann die obere Hälfte des Daten/Programm-Schreib/Lese-Speichers 43 für die Applikation benutzt werden, während die untere Hälfte des Daten/Programm-Schreib/Lese-Speichers weiterhin als normaler Schreib/Lese-Speicher zur Verfügung steht. Der Registerplatz ENAR dient zur generellen Freigabe der Vergleicherschaltung 47. Nur wenn auf dem Registerplatz ENAR das Bit gesetzt ist, ist die Vergleicherschaltung 47 aktiv. Im Normalbetrieb des Steuergerätes kann daher kein Chipauswahlsignal CSAPR erzeugt werden. Durch den Registerplatz SIZE wird die Größe des angeschlossenen Daten/Programm-Schreib/Lese-Speichers angegeben. Die Decodierschaltung 41 erlaubt nämlich auch den Einsatz von 32 KByte großen Daten/Programm-Schreib/Lese-Speichern 43. Wenn auf dem Registerplatz SIZE das Bit gesetzt ist, bedeutet dies, daß ein 32 KByte großer Daten/Programm-Schreib/Lese-Speicher 43 eingesetzt ist. Es werden dann nur die Registerplätze RA 15 bis RA17 mit den entsprechenden Eingängen B der Vergleicherschaltung 47 verglichen. Ist auf dem Registerplatz SIZE das Bit nicht gesetzt, so bedeutet dies, daß, wie beschrieben, die Registerplätze RA13 bis RA17 zur Auswahl des zu applizierenden Speicherbereiches herangezogen werden. Es muß jedoch hierzu noch erwähnt werden, daß in dem Fall des Einsatzes eines größeren Daten/Programm-Schreib/Lese-Speichers 43 nicht nur die Adreßleitungen A0 bis A11 an diesen Speicher herangeführt sein müssen, sondern auch die Adreßleitungen A12 und A13. Die Adreßleitung A14 wäre dann so geschaltet wie die Adreßleitung A12 in Figur 4.

In Figur 8 ist noch die beschriebene Speichereinteilung für den Einsatz des 8 KByte großen Daten/Programm-Schreib-Lese-Speichers 43 dargestellt. Der Adreßbereich von 00000H bis 3DFFFH ist für den Daten/Programm-Festwertspeicher 42 vorgesehen. Der obere Adreßbereich von 3E000H bis 3FFFFH ist für den Daten/Programm-Schreib/Lese-Speicher 43 reserviert.

Bei dem beschriebenen Steuergerät kann also eine Applikation sehr einfach durchgeführt werden, indem an die serielle Schnittstelle SS0 ein externes Kommunikationsgerät (z.B. ein Personalcomputer) angeschlossen wird. Durch Beschreibung des Adressenregisters 15 wird der Applikationsbereich ausgewählt. Während der Applikationsphase kann der Bereich des Daten/Programm-Schreib/Lese-Speichers manipuliert bzw. optimiert werden. Nach Beendigung des Optimierungsprozesses werden die von dem externen Kommunikationsgerät protokollierten Änderungen in die Originaladressen des Daten/Programm-Festwertspeichers (EPROM) programmiert. Dies kann durch Neubrennen eines EPROMs oder entsprechende Algorithmen erfolgen, durch die das Steuergerät veranlaßt wird, die von dem externen Kommunikationsgerät übertragenen Daten oder die im manipulierten Daten/Programm-Schreib/Lese-Speicher 43 stehenden Daten in das im Steuergerät vorhandene Flash-EPROM zu programmieren.

Die Decodierschaltung 41 kann in eine sowieso vorhandene Decodierschaltung z.B. für die Speicherbankumschaltung integriert sein.

Sollte in einem Steuergerät nicht ausreichend Schreib-/Lesespeicher vorhanden sein, ist auch eine Variante möglich, in der lediglich während der Applikationsphase ein zusätzlicher Schreib-Lese-Speicher bestückt wird, der in der Serie jedoch unbestückt bleibt.

## Patentansprüche

1. Verfahren zur Optimierung von Daten und/oder Programmteilen für programmierte Steuergeräte (10), insbesondere zur Steuerung von Zündung, Kraftstoffeinspritzung oder Getriebeschaltvorgängen in Kraftfahrzeugen, wobei die programmierten Steuergeräte einen Daten- und/oder Programm-Festwertspeicher (Flash-EPROM) und einen Datenund/Oder Programm-Schreib/Lese-Speicher (RAM) aufweisen, wobei ein Steuerprogramm des Steuergerätes im Datenund/Oder Programm-Festwertspeicher (Flash-EPROM) eingespeichert wird, wobei das programmierte Steuergerät über eine Schnittstelle, insbesondere serielle Schnittstelle, mit einem externen Applikationsgerät verbunden wird, über das die Änderungen der zu optimierenden Daten und/oder Programmteile eingegeben werden, **dadurch gekennzeichnet, daß** die zu optimierenden Daten und/oder Programmteile vor der Optimierung in den Daten- und/oder Programm-Schreib/Lese-Speicher (RAM) des Steuergerätes (10) geladen werden, daß in dem Steuerprogramm und/oder in Speicher- und/oder Registerplätzen des Steuergerätes (10) spezifische Änderungen vorgenommen werden, die bewirken, daß der Mikrorechner (µP, 12) des Steuergerätes (10) statt auf die Daten und/oder Programmteile im Daten- und/oder Programm-Festwertspeicher (Flash-EPROM) auf die Daten und/oder Programmteile im Daten- und/oder Programm-Schreib/Lese-Speicher (RAM) zugreift.

2. Verfahren nach Anspruch 1, **dadurch gekennzeichnet, daß** die spezifischen Änderungen im Steuerprogramm sich auf Änderungen bestimmter im Steuerprogramm einprogrammierter Adressen und/oder auf die Einfügung von zusätzlichen Verzweigungsstellen beziehen.

3. Verfahren nach Anspruch 2, **dadurch gekennzeichnet, daß** die zusätzlichen Verzweigungsstellen bedingte Verzweigungen (31, 35) darstellen, und nur dann zu einer Verzweigung führen, wenn zuvor über das Applikationsgerät (11) ein bestimmtes Codewort eingegeben wurde.

4. Verfahren nach Anspruch 2, **dadurch gekennzeichnet, daß** die zusätzlichen Verzweigungsstellen unbedingte Verzweigungen darstellen.

5. Verfahren nach einem der vorhergehenden Ansprüche, **dadurch gekennzeichnet, daß** in dem Steuerprogramm von vornherein bedingte Verzweigungsstellen vorgesehen werden, die aber nur dann zu einer Verzweigung führen, wenn in mindestens einem Register- und/oder Speicherplatz des Steuergerätes (10) ein entsprechend geänderter Eintrag vorliegt.

6. Verfahren nach Anspruch 1, **dadurch gekennzeichnet, daß** die Änderung der Registerplätze in mindestens einem bestimmten Adressregister des Mikrorechners (µP, 12) vorgenommen wird und daß der Mikrorechner (µP, 12) entsprechend der Einträge in dem mindestens einen Adressregister (15) eine automatische Umschaltung vornimmt, so daß der Mikrorechner (µP, 12) auf die zu optimierenden Daten und/oder Programmteile im Daten- und/oder Programm-Schreib/Lese-speicher (RAM) zugreift.

7. Verfahren nach Anspruch 5 oder 6, **dadurch gekennzeichnet, daß** die Änderungen der Register- und/oder Speicherplätze über das Applikationsgerät (11) in das Steuergerät (10) eingegeben werden.

8. Verfahren nach einem der vorhergehenden Ansprüche, **dadurch gekennzeichnet, daß** die zu optimierenden Daten und/oder Programmteile von dem Applikationsgerät (11) aus in den Daten- und/oder Programm-Schreib/Lese-Speicher (RAM) geladen werden.

9. Verfahren nach einem der vorhergehenden Ansprüche, **dadurch gekennzeichnet, daß** die zu optimierenden Daten und/oder Programmteile von dem Daten- und/oder Programm-Festwertspeicher (Flash-EPROM) in den Daten- und/oder Programm-Schreib/Lese-Speicher (RAM) kopiert werden.

10. Verfahren nach einem der vorhergehenden Ansprüche, **dadurch gekennzeichnet, daß** als Daten- und/oder Programm-Festwertspeicher ein Flash-EPROM eingesetzt wird.

11. Verfahren nach Anspruch 9, **dadurch gekennzeichnet, daß** das Flash-EPROM nach Auffindung der optimierten Daten und/oder Programmteile neu programmiert wird, wobei die optimierten Daten und/oder Programmteile in das Steuerprogramm des programmierten Steuergerätes (10) integriert werden.

12. Verfahren nach einem der vorhergehenden Ansprüche, **dadurch gekennzeichnet, daß** als Schnittstelle (SS0) eine am Steuergerät (10) vorhandene serielle Diagnose-Schnittstelle oder eine serielle Schnittstelle für den Datenaustausch zu weiteren anschließbaren Steuergeräten, insbesondere CAN (Controller Area Network)- Schnittstelle verwendet wird.

13. Steuergerät, insbesondere Kraftfahrzeugsteuergerät, mit einem Mikrorechner, mit einem Daten- und/oder Programm-Festwertspeicher, mit einem Daten- und/oder Programm-Schreib/Lese-Speicher, **dadurch gekennzeichnet, daß** eine Decodierschaltung (41) vorgesehen ist, die bei einem Zugriff des Mikrorechners (40) auf eine bestimmte Adresse oder einen bestimmten Adreßbereich eine Umschaltung derart vornimmt, daß der Mikrorechner (40) statt auf die Daten und/oder Programmteile im Daten- und/oder Programm-Festwertspeicher (42) auf die entsprechenden Daten und/oder Programmteile im Daten- und/oder Programm-Schreib/Lese-Speicher (43) zugreift.

14. Steuergerät nach Anspruch 13, **dadurch gekennzeichnet, daß** die Decodierschaltung (41) ein Adreßregister (15) enthält, in das die bestimmte Adresse oder der bestimmte Adreßbereich einschreibbar ist, bei der oder dem die Umschaltung vorgenommen wird.

15. Steuergerät nach Anspruch 13 oder 14, **dadurch gekennzeichnet, daß** die Decodierschaltung (41) zusammen mit einer Speicherbank-Umschalteinrichtung auf einem Chip integriert ist.

16. Steuergerät nach einem der vorhergehenden Ansprüche, **dadurch gekennzeichnet, daß** eine serielle Schnittstelle (SS0) vorgesehen ist, über die das Steuergerät mit einem externen Kommunikationsgerät verbindbar ist und über die der Mikrorechner (40) Schreib- und/oder Lesebefehle für das Adreßregister (15) und den Daten- und/oder Programm-Schreib/Lese-Speicher (43) von dem externen Kommunikationsgerät empfangen kann.

## Claims

1. Method for optimizing data and/or program parts for programmed control units (10), particularly for controlling ignition, fuel injection or gear-shift Operations in motor vehicles, where the programmed control units have a data and/or program read-only memory (Flash-EPROM) and a data and/or program read/write memory (RAM), where a control program for the control unit is stored in the data and/or program read-only memory (Flash-EPROM), where the programmed control unit is connected via an interface, particularly a serial interface, to an external application unit which is used to enter the changes for the data and/or program parts which are to be optimized, **characterized in that** the data and/or program parts which are to be optimized are loaded, before optimization, into the data and/or program read/write memory (RAM) in the control unit (10), **in that** specific changes prompting the microcomputer (µP, 12) in the control unit (10) to access the data and/or program parts in the data and/or program read/write memory (RAM) instead of the data and/or program parts in the data and/or program read-only memory (Flash-EPROM) are made in the control program and/or in storage and/or register locations in the control unit (10).

2. Method according to Claim 1, **characterized in that** the specific changes in the control program relate to changes to particular addresses programmed in the control program and/or relate to the insertion of additional branch points.

3. Method according to Claim 2, **characterized in that** the additional branch points represent conditional branches (31, 35) and lead to a branch only if the application unit (11) has previously been used to enter a particular code word.

4. Method according to Claim 2, **characterized in that** the additional branch points represent unconditional branches.

5. Method according to one of the preceding claims, **characterized in that** conditional branch points are provided in the control program from the outset but lead to a branch only if at least one register and/or storage location in the control unit (10) contains an appropriately changed entry.

6. Method according to Claim 1, **characterized in that** the register locations are changed in at least one particular address register of the microcomputer (µP, 12), and **in that** the microcomputer (µP, 12) performs automatic changeover in line with the entries in the at least one address register (15), so that the microcomputer (µP, 12) accesses the data and/or program parts to be optimized in the data and/or program read/write memory (RAM).

7. Method according to Claim 5 or 6, **characterized in that** the changes to the register and/or storage locations are entered into the control unit (10) using the application unit (11).

8. Method according to one of the preceding claims, **characterized in that** the data and/or program parts to be optimized are loaded into the data and/or program read/write memory (RAM) from the application unit (11).

9. Method according to one of the preceding claims, **characterized in that** the data and/or program parts to be optimized are copied from the data and/or program read-only memory (Flash-EPROM) to the data and/or program read/write memory (RAM).

10. Method according to one of the preceding claims, **characterized in that** the data and/or program read-only memory used is a flash EPROM.

11. Method according to Claim 9, **characterized in that** the flash EPROM is reprogrammed when the optimized data and/or program parts have been found, the optimized data and/or program parts being integrated into the control program for the programmed control unit (10).

12. Method according to one of the preceding claims, **characterized in that** the interface (SS0) used is a serial diagnosis interface provided on the control unit (10) or a serial interface for data interchange with further connectable control units, particularly a CAN (Controller Area Network) interface.

13. Control unit, particularly motor vehicle control unit, having a microcomputer, having a data and/or program read-only memory, having a data and/or program read/write memory, **characterized in that** a decoding circuit (41) is provided which, when the microcomputer (40) accesses a particular address or a particular address range, performs a changeover such that the microcomputer (40) accesses the corresponding data and/or program parts in the data and/or program read/write memory (43) instead of the data and/or program parts in the data and/or program read-only memory (42).

14. Control unit according to Claim 13, **characterized in that** the decoding circuit (41) contains an address register (15) to which the particular address or the particular address range at or in which the changeover is performed can be written.

15. Control unit according to Claim 13 or 14, **characterized in that** the decoding circuit (41) is integrated on a chip together with a memory bank changeover device.

16. Control unit according to one of the preceding claims, **characterized in that** a serial interface (SS0) is provided which can be used to connect the control unit to an external communications unit and which the microcomputer (40) can use to receive read/write commands for the address register (15) and the data and/or program read/write memory (43) from the external communications unit.

## Revendications

1. Procédé d'optimisation de données et/ou de segments de programmes pour des appareils de commande programmés (10) notamment pour commander l'allumage, l'injection de carburant ou les opérations de changement de vitesse dans un véhicule automobile, selon lequel les appareils de commande programmés comportent une mémoire morte de données et/ou de programme (Flash-EPROM) et une mémoire enregistrement/lecture de données/programme (RAM),
un programme de commande de l'appareil de commande étant enregistré dans la mémoire morte de données et/ou de programme (Flash-EPROM),
l'appareil de commande programmé étant relié par une interface notamment une interface série avec un appareil d'application externe, par lequel on charge les modifications des données et/ou segments de programmes à optimiser,
**caractérisé en ce qu'**
on charge les données et/ou segments de programmes à optimiser, avant optimisation dans la mémoire enregistrement/lecture de données et/ou de programme (RAM) de l'appareil de commande 10,
dans le programme de commande et/ou dans la mémoire et/ou aux emplacements de registre d'appareil de commande (10) on effectue des modifications spécifiques qui font que le microcalculateur (µP, 12) de l'appareil de commande (10) accède non pas aux données et/ou aux segments de programmes dans la mémoire morte de données et/ou de programme (Flash-EPROM) mais aux données et/ou segments de programmes de la mémoire enregistrement/lecture de données/ou de programme (RAM).

2. Procédé selon la revendication 1,
**caractérisé en ce que**
les modifications spécifiques dans le programme de commande concernent des modifications d'adresses définies, programmées dans le programme de commande et/ou l'insertion de points de dérivation supplémentaires.

3. Procédé selon la revendication 2,
**caractérisé en ce que**
les points de dérivation supplémentaires représentent des points de dérivation nécessaires (31, 35) et ils ne conduisent à une dérivation que si préalablement l'appareil d'application (11) a introduit un mot de code déterminé.

4. Procédé selon la revendication 2,
**caractérisé en ce que**
les points de dérivation supplémentaires représentent des dérivations nécessaires.

5. Procédé selon l'une quelconque des revendications précédentes,
**caractérisé en ce que**
le programme de commande comporte d'emblée des points de dérivation nécessaires qui n'aboutissent qu'à une dérivation si dans au moins un emplacement de registre et/ou de mémoire de l'appareil de commande (10) on a un enregistrement modifié de manière correspondante.

6. Procédé selon la revendication 1,
**caractérisé en ce que**
la modification des emplacements de registre se fait dans au moins un registre d'adresses déterminé du microcalculateur (µP, 12), et
le microcalculateur (µP, 12) effectue suivant les enregistrements dans au moins un registre d'adresses (15), une commutation automatique de façon que le microcalculateur (µP, 12) accède aux données optimisées et/ou segments de programmes dans la mémoire enregistrement/lecture de données/de programme (RAM).

7. Procédé selon l'une quelconque des revendications 5 ou 6,
**caractérisé en ce que**
les modifications des emplacements de registre et/ou de mémoire se font par l'appareil d'application (11) dans l'appareil de commande (10).

8. Procédé selon l'une quelconque des revendications précédentes,
**caractérisé en ce que**
les données à optimiser et/ou les parties de programme sont chargées par l'appareil d'application (11) à partir de la mémoire enregistrement/lecture de données et/ou de programme (RAM).

9. Procédé selon l'une quelconque des revendications précédentes,
**caractérisé en ce que**
les données et/ou segments de programme à optimiser sont copiés à partir de la mémoire morte de données et/ou de programme (Flash-EPROM) dans la mémoire enregistrement/lecture de données et/ou de programme (RAM).

10. Procédé selon l'une quelconque des revendications précédentes,
**caractérisé en ce que**
la mémoire morte de données et/ou de programme est une mémoire Fash-EPROM.

11. Procédé selon la revendication 9,
**caractérisé en ce que**
la mémoire Flash-EPROM, après la recherche des données optimisées et/ou les segments de programmes est reprogrammée et les données et/ou segments de programmes optimisées sont intégrées dans le programme de commande de l'appareil de commande programmé (10).

12. Procédé selon l'une quelconque des revendications précédentes,
**caractérisé en ce que**
l'interface (SSO) est une interface de diagnostic série existant dans l'appareil de commande (10) ou une interface série pour l'échange de données pour d'autres appareils de commande à brancher notamment un réseau CAN (réseau à zone commandée) comme interface.

13. Appareil de commande notamment appareil de commande de véhicule automobile comportant un microcalculateur, une mémoire morte avec des données et/ou des programmes, une mémoire enregistrement/lecture avec des données et/ou des programmes,
**caractérisé par**
un circuit de décodage (41) qui pour un accès du microcalculateur (40) à une certaine adresse ou une certaine plage d'adresses effectue une commutation pour que le microcalculateur (40), au lieu d'accéder aux données et/ou parties de programme dans la mémoire morte de données et/ou de programme (42), accède aux données et/ou segments de programmes de la mémoire enregistrement/lecture de données et/ou de programme 43.

14. Appareil de commande selon la revendication 13,
**caractérisé en ce que**
le circuit de décodage (41) comporte un registre d'adresses (15) dans lequel on peut inscrire l'adresse déterminée ou une certaine plage d'adresses pour laquelle on effectue la ou les commutations.

15. Appareil de commande selon l'une quelconque des revendications 13 ou 14,
**caractérisé en ce que**
le décodeur (41) est intégré avec l'installation de commutation de l'ensemble des mémoires sur une puce.

16. Appareil de commande selon l'une quelconque des revendications précédentes,
**caractérisé par**
une interface série (SSO) par laquelle l'appareil de commande est relié à un appareil de communication externe et par laquelle le microcalculateur (40) peut recevoir de l'appareil externe de communication des ordres d'enregistrement et/ou de lecture, pour le registre d'adresses (15) et pour la mémoire enregistrement/lecture de données et/ou de programme (43).
